# EUROPEAN PATENT APPLICATION

(11) **EP 2 837 457 A1**
(43) Date of publication of application: **18.02.2015**
(21) Application number: 13180259.7
(22) Date of filing: 13.08.2013
(51) Int. Cl.: B23K 1/00, B23K 1/005, F01D 5/18

(54) **A technique for brazing turbomachine components**

(71) Applicant: Siemens Aktiengesellschaft, 80333 München (DE)
(72) Inventor: Burbaum, Bernd, 14612 Falkensee (DE); Laux, Britta, 14059 Berlin (DE); Ott, Michael, 45470 Mülheim an der Ruhr (DE); Piegert, Sebastian, 10777 Berlin (DE)

(57) **Abstract**

A method and a system for covering a hole in a turbomachine component is provided. In the method, a braze material is placed on the turbomachine component along at least a part of an outline of the hole. A throttle plate is positioned overlaying at least the outline of the hole. An energy beam is generated from an energy source and the energy beam is directed towards the throttle plate to braze the throttle plate to the turbomachine component. For the brazing, the braze material is heated by energy of the energy beam conducted through the throttle plate.

## Description

The present invention relates to a technique for brazing turbomachine components, and more particularly to a method and a system for covering a hole in a turbomachine component by brazing.

Alloys such as superalloys that exhibit excellent mechanical strength, resistance to creep at high temperatures, good surface stability, and corrosion and oxidation resistance are used as base material in manufacturing turbomachine components that are subjected to high temperatures and/or mechanical stress during operation of the turbomachine. For example, superalloys such as Nickel based superalloys, Cobalt based superalloys, etc having specific microstructures such as Gamma/Gamma prime (γ/γ') microstructure are used as the base material for manufacturing blade components and vane components in gas turbines. In spite of using superalloys, there exists a need to cool the turbomachine components when the temperatures of the turbomachine components rise during operation of the turbomachine. This necessitates creation of complex cooling passage networks within the turbomachine component for allowing a flow of cooling fluid such as cooling air through the cooling passages in order to achieve cooling of the turbomachine component. The cooling passages or cavities are created during the manufacturing of the turbomachine component usually by casting. Sometimes other post manufacturing fabrication techniques such as drilling are employed to create the cooling passages or cavities in the turbomachine component.

During the casting process or other post manufacturing fabrication processes, holes are created in the turbomachine component. For example, during casting the turbomachine component may be secured using quartz rods. Such quartz rods may also be used to define the central passageways or straight holes into the turbomachine component which can subsequently be fabricated post casting to create the complex cooling passages. Some or all of the holes so created may be unwanted. Thus after completion of the manufacturing or post manufacturing processes there exists a requirement to cover or seal the holes to ensure regulation of the cooling fluid, for example to ensure that cooling air does not exit from one such unwanted hole or that it does not deviate from its intended flow path due to a diversion created by one of the unwanted holes. The regulation may also include regulating the amount of cooling fluid flowing into or out of the turbomachine component by covering or closing some of the holes out of a plurality of such holes present in the turbomachine component.

Traditionally, the holes are closed or sealed by attaching an alloy overlay or a cover plate to the turbomachine component by using welding such as tungsten inert gas welding (TIG welding). During welding, a weld pool is created wherein parts of the components to be welded together, i.e. material region of the turbomachine component adjoining the hole and a part of the cover plate or throttle plate, is melted. The melt pool, also referred to as the weld pool, coalesces on cooling resulting into welded joints. However, as a result of the melting of the base material of the turbomachine component in the region of the turbomachine component adjoining the hole, the microstructure of the base material gets affected and may result in at least partial disintegration of the microstructure in the affected region which subsequently results in degradation of the thermo-mechanical properties of the base material and thus that of the turbomachine component. Similar degradation may result in microstructure of a coating material that has been applied on the base material of the turbomachine component, if the welding of the cover plate or the throttle plate is carried out after the application of the coating material on the turbomachine component. Furthermore, welding may also affect microstructure of the cover plate or the throttle plate material in a similar way. Thus a technique for covering the holes in the turbomachine component which at least partially obviates the disintegration of the microstructure is desirable.

It is therefore an object of the present technique to provide a technique for covering a hole in a turbomachine component by using a throttle plate which at least partially obviates the disintegration of the microstructure of the turbomachine component and/or the throttle plate.

The object is achieved by a method for covering a hole in a turbomachine component according to claim 1 and a brazing system for covering a hole in a turbomachine component according to claim 10 of the present technique.

According to an aspect of the present technique, a method for covering a hole in a turbomachine component is provided. In the method, a braze material is placed on the turbomachine component along at least a part of an outline of the hole. A throttle plate is positioned overlaying at least the outline of the hole. An energy beam is generated from an energy source and the energy beam is directed towards the throttle plate to braze the throttle plate to the turbomachine component. For the brazing, the braze material is heated by energy of the energy beam conducted through the throttle plate. Since, the braze material melts to join the throttle plate to the turbomachine component unlike welding wherein the turbomachine component as well as the throttle plate are melted to form the weld pool, the disintegration of the microstructure of the turbomachine component is at least partially obviated. Moreover, since the braze material is indirectly heated by the energy beam, i.e. the braze material is not heated directly by the energy beam but only by energy conducted from the throttle plate to the braze material, the chances of over-heating and/or vaporization of the braze material are minimized.

In an embodiment of the method in directing the energy beam towards the throttle plate, the energy beam in a defocused form is directed onto the throttle plate to pre-heat the throttle plate. Subsequently, the energy beam in a focused form is directed onto the throttle plate so pre-heated to melt the braze material. As a result of the pre-heating, temperatures in the regions of the throttle plate onto which later the energy beam in focused form is not directed are raised so that the throttle plate does not suffer structural deformation due to extreme temperature differences when the energy beam in focused form is directed onto the throttle plate.

In another embodiment of the method, the energy beam in the defocused form is directed onto the throttle plate such that the energy beam traces a linear path on the throttle plate in a to-and-fro manner. This results in a linear intensity distribution of the energy beam causing the energy of the energy beam to distribute uniformly and thus homogenization of temperatures in the throttle plate during pre-heating.

In another embodiment of the method, the energy beam in the focused form is directed onto the throttle plate such that the energy beam traces a looped path on the throttle plate corresponding to the outline of the hole in the turbomachine component. This causes the energy of the energy beam to distribute uniformly in the throttle plate and thus homogenized conduction of energy from the throttle plate to the braze material.

In another embodiment of the method, the energy beam is a laser beam. This provides a simple and efficient way of providing energy to the throttle plate required for the heating of the throttle plate. Moreover, the laser beam can easily be focused or defocused according to the requirement of the method.

In another embodiment of the method, the energy beam is an electron beam. This provides a simple and efficient way of providing energy to the throttle plate required for the heating of the throttle plate. Moreover, the electron beam can easily be focused or defocused according to the requirement of the method.

In another embodiment of the method, the turbomachine component is a blade or a vane of a turbomachine. Thus the method is used for closing or sealing the holes in the blade or the vane of the turbomachine.

In another embodiment of the method, the hole is in a root of the blade or the vane. Thus the method is used for closing or sealing the holes such as openings commonly referred to as core exit holes in the root of the blade or the vane.

In another embodiment of the method, the hole is in a platform of the blade or the vane. Thus the method is used for closing or sealing the holes such as openings commonly referred to as core exit holes in the platform of the blade or the vane.

According to another aspect of the present technique, a brazing system for covering a hole in a turbomachine component is provided. The brazing system brazes a throttle plate to the turbomachine component using a braze material. The brazing system includes an energy source, a beam deflector and a controller. The energy source is adapted to generate an energy beam. The beam deflector is adapted to direct the energy beam towards the throttle plate to braze the throttle plate to the turbomachine component. The controller is adapted to regulate the beam deflector such that the energy beam is directed towards the throttle plate such that the braze material is heated by energy of the energy beam conducted through the throttle plate. Since, the brazing system melts the braze material to join the throttle plate to the turbomachine component unlike traditionally used welding systems which melt the turbomachine component as well as the throttle plate to form the weld pool, the disintegration of the microstructure of the turbomachine component is at least partially obviated by the brazing system. Moreover, since the brazing system heats the braze material indirectly, i.e. the braze material is not heated directly by the energy beam but only by energy conducted from the throttle plate to the braze material, the chances of over-heating and/or vaporization of the braze material are minimized.

In an embodiment of the brazing system, the beam deflector is further adapted to adjust a focal point of the energy beam. Thus, the energy beam is defocused or focused to achieve pre-heating of the throttle plate or to heat the throttle plate so as to melt the brazing material by conduction of energy from the throttle plate to the brazing material, respectively.

In another embodiment of the brazing system, the beam deflector is further adapted to move the energy beam such that the energy beam traces a pre-determined path on the throttle plate. Thus the energy beam may be moved in such path geometries that result in a linear intensity distribution of the energy beam causing the energy of the energy beam to distribute uniformly in the throttle plate and thus homogenization of temperatures in the throttle plate during pre-heating and/or homogenized conduction of energy from the throttle plate to the braze material.

In another embodiment, the brazing system further includes a recognition module, a braze material deposition module, and a plate positioning module. The recognition module is adapted to recognize a region of the turbomachine component around an outline of the hole in the turbomachine component. The braze material deposition module is adapted to place the braze material on at least a part of the region of the turbomachine component. The plate positioning module is adapted to position the throttle plate overlaying at least the outline of the hole. Thus the braze system is automated requiring minimal or no human intervention, and thereby the chances of manual errors are reduced.

In another embodiment of the brazing system, the energy source is adapted to generate a laser beam. The laser beam provides a simple and efficient way of heating the throttle plate. Moreover, the laser beam can easily be focused or defocused.

In another embodiment of the brazing system, the energy source is adapted to generate an electron beam. The electron beam provides a simple and efficient way of heating the throttle plate. Moreover, the electron beam can easily be focused or defocused.

The present technique is further described hereinafter with reference to illustrated embodiments shown in the accompanying drawings, in which:
- FIG 1: is a flow chart depicting a method of the present technique;
- FIG 2: is a schematic representation of an exemplary embodiment of a turbomachine component depicting a blade of a turbomachine;
- FIG 3: is a schematic representation of an exemplary embodiment of the turbomachine component depicting a vane of a turbomachine;
- FIG 4: is a schematic representation of an exemplary embodiment of a throttle plate;
- FIG 5: is a schematic representation of a bottom view of an exemplary embodiment of a platform of the vane;
- FIG 6: is a schematic representation of a bottom view of an exemplary embodiment of the platform of the vane with the throttle plate;
- FIG 7: is a schematic representation of an exemplary embodiment of a brazing system of the present technique;
- FIG 8: is a schematic representation of a cross-sectional view of an exemplary embodiment of the platform of the vane;
- FIG 9: is a schematic representation of a cross-sectional view of the exemplary embodiment of FIG 8 with the throttle plate;
- FIG 10: is a schematic representation of the throttle plate depicting a linear path on the throttle plate; and
- FIG 11: is a schematic representation of the throttle plate depicting a looped path on the throttle plate; in accordance with aspects of the present technique.

Hereinafter, above-mentioned and other features of the present technique are described in details. Various embodiments are described with reference to the drawings, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

Spatially relative terms, such as 'below', 'above', 'beneath', and the like, may be used herein for ease of description to describe one element or feature's relationship to another element(s) or feature(s) as illustrated in the accompanying figures. It will be understood that the spatially relative terms are intended to encompass different orientations of the device/workpiece in use or operation in addition to the orientation depicted in the figures. For example, if the device/workpiece in the figures is turned over, an element described as 'below' another element or feature would then be oriented 'above' the other element or feature. Thus, term such as 'below' can encompass both an orientation of above and below. The device may be otherwise oriented (rotated 90 degrees or at other orientations) and the spatially relative descriptors used herein are interpreted accordingly.

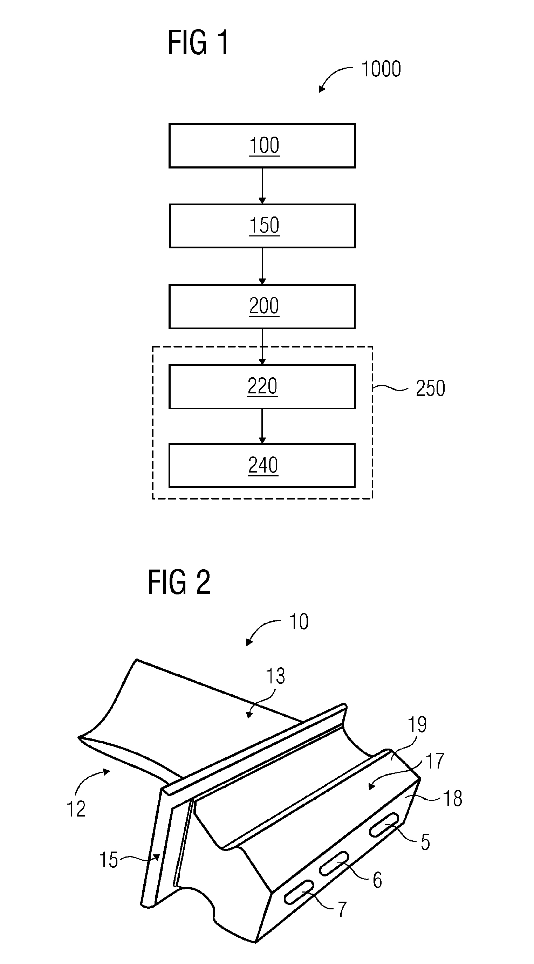

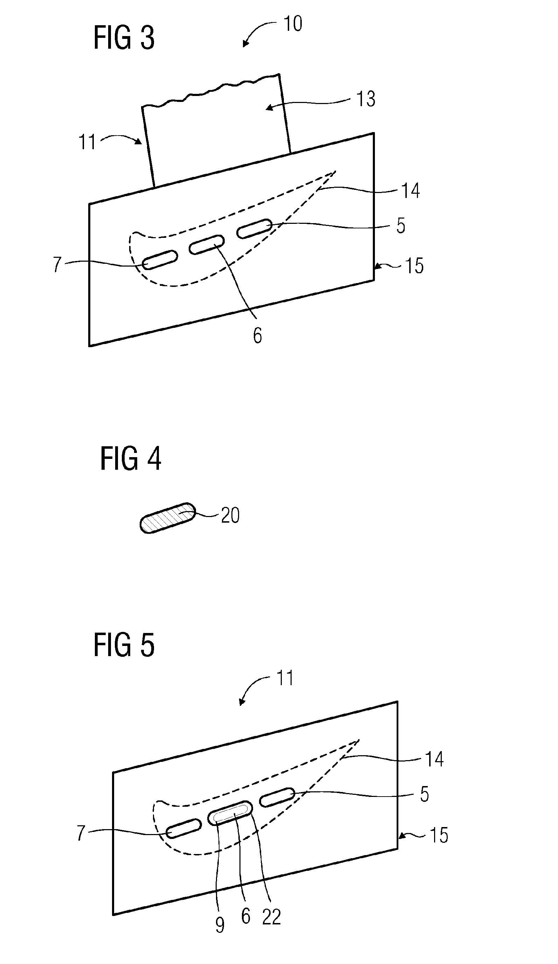

Each of FIG 2 and FIG 3 schematically represent an exemplary embodiment of a turbomachine component 10. The turbomachine component 10 may be a blade 12 or a vane 11 of a turbomachine (not shown), as depicted in FIG 2 and FIG 3, respectively. The turbomachine may be, but not limited to, a gas turbine. The turbomachine component 10 includes a platform 15 from which extend an airfoil 13 and a root 17 in opposite directions. The turbomachine component 10 may be composed of an alloy having a characteristic microstructure such as a Nickel based superalloy having a gamma/gamma prime (γ/γ') microstructure or Cobalt based superalloy having its characteristic microstructure. The turbomachine component 10 may optionally be coated with a coat material (not shown) having another characteristic microstructure. One or more holes 5,6,7 may be present in the turbomachine component 10. The holes 5,6,7 may be created during a manufacturing process such as casting or a post manufacturing fabrication process such as drilling. For example, the holes 5,6,7 may be core exit holes created during casting of the turbomachine component 10.

The holes 5,6,7 may have different shapes and sizes and may be present in any region of the turbomachine component 10 for example say in the platform 15 beneath the airfoil 13 of the vane 11 i.e. in the platform 15 of the vane 11 within a region 14 corresponding to an outline of the airfoil 13 (as depicted in FIG 3) or say in a base 18 of the root 17 of the blade 12 (as depicted in FIG 2). Though not illustrated, the holes 5,6,7 may also be present on a side 19 of the root 17, or on a side (not shown) of the platform 15, or in the airfoil 13 of the turbomachine component 10.

Hereinafter, for the sole purpose of illustration, and not for limitation, one of the holes 5,6,7 i.e. the hole 6 is selected to be covered by using the present technique. The hole 6 is covered by a throttle plate 20 as depicted in FIG 4. The throttle plate 20 is a plate or sheet made of alloy or other metallic or ceramic material used to cover the hole 6. The throttle plate 20 may be of different shapes and sizes. The throttle plate 20 may be manufactured conforming to the shape or configuration of the hole 6 and may be of a size such that when the throttle plate 20 is overlaid or overlapped on the hole 6, the throttle plate 20 covers the hole 6 and extends slightly beyond a silhouette of the hole 6. The throttle plate 20 may optionally have a sieve like structure (not shown) having one or more openings (not shown) to allow fluid communication through the throttle plate 20.

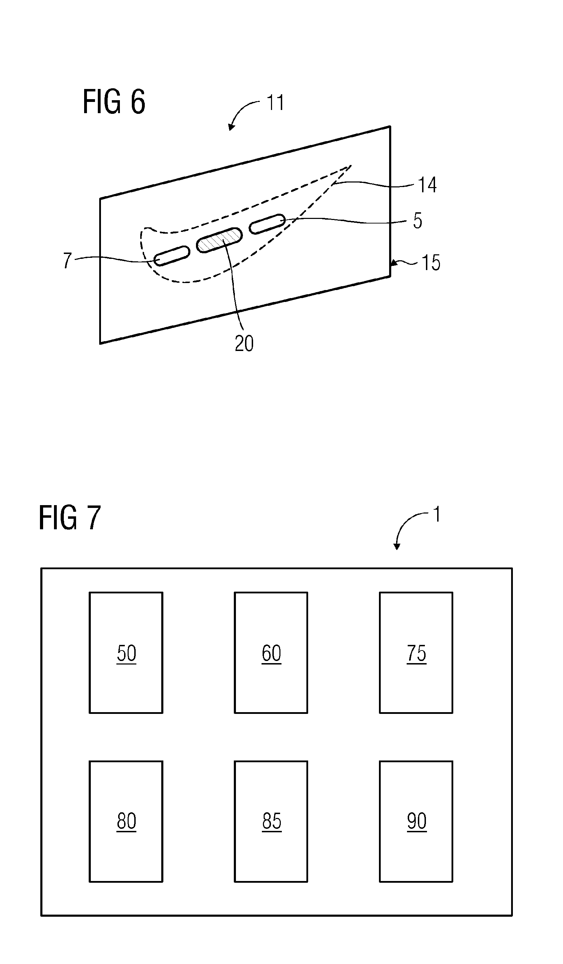

FIG 1 is a flow chart depicting a method 1000 of the present technique and FIG 7 is a schematic representation of a brazing system 1 of the present technique. The brazing system 1 includes an energy source 50, a beam deflector 60, and a controller 75. Hereinafter, the method 1000 and the brazing system 1 are explained with the help of FIGs 5 to 11.

Referring to FIG 1 in combination with FIG 5, the method 1000, according to an exemplary embodiment, is explained for covering the hole 6 in the region 14 of the platform 15 of the vane 11, as depicted in FIG 5. In the method 1000, a braze material 22 is placed on the turbomachine component 10 i.e. the vane 11 in this embodiment, in a step represented by reference numeral 100. The braze material 22 is in direct physical contact with the turbomachine component 10. The braze material 22 is placed along at least a part of an outline 9 of the hole 6. The outline 9 of the hole 6 means the silhouette or configuration of the hole 6. The braze material 22 may be in form of a ring shape or circular structure or having a shape conforming or matching to the outline 9 of the hole 6. The braze material 22 may be in a wire form that can be folded into the ring shape conforming to the outline 9 of the hole 6.

The braze material 22 is a filler material as used conventionally in brazing and may be formed of a variety of alloys depending on the physical and chemical properties of the materials of the turbomachine component 10 and/or the throttle plate 20, such as melting points of the materials of which the turbomachine components 10 and/or the throttle plate 20 are composed of, type of the turbomachine component 10, temperatures to which the turbomachine component 10 and/or the throttle plate 20 are subjected during operation of the turbomachine, and so forth. For example, the braze material 22 may be a cobalt based or nickel based brazing alloy.

In the method 1000 as depicted in FIG 1, subsequent to step 100, the throttle plate 20 is positioned overlaying at least the outline 9 of the hole 6 in a step 150. FIG 6 depicts the throttle plate 20 positioned on the vane 11 extending over the hole 6 and the braze material 22. The throttle plate 20 may be positioned such that the shape of the throttle plate 20 conforms or matches to the outline 9 of the hole 6 and/or the shape of the braze material 22. The throttle plate 20 is in direct physical contact with the braze material 22. Thus, the braze material 22 is directly sandwiched between the turbomachine component 10 and the throttle plate 20.

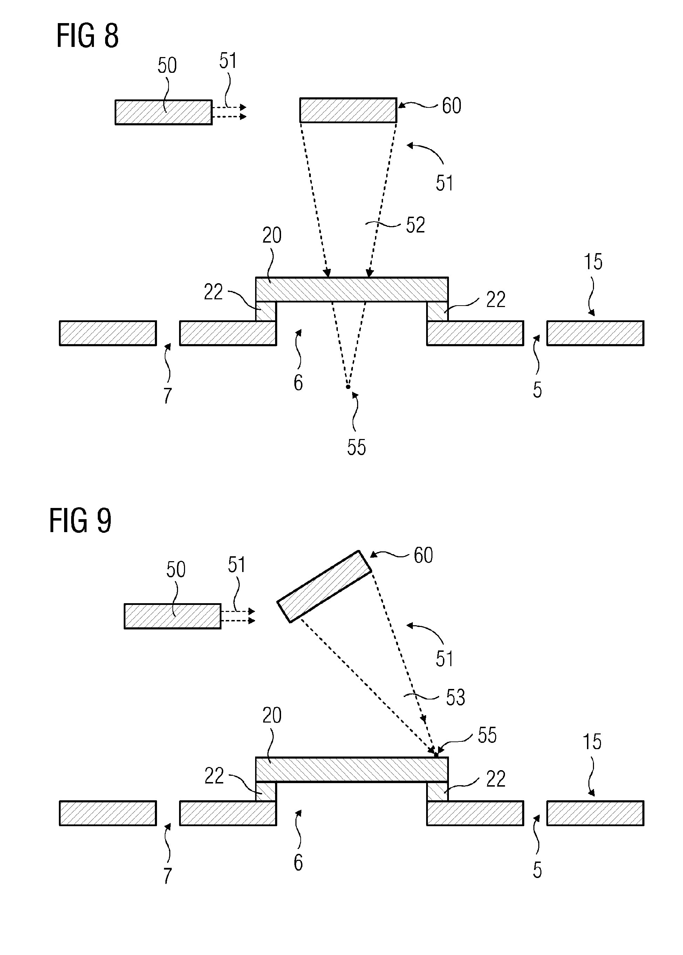

Referring to FIG 1 in combination with FIG 8 and FIG 9, in the method 1000, subsequent to the step 150, an energy beam 51 is generated from the energy source 50 in a step 200 and finally the energy beam 51 is directed towards the throttle plate 20 in a step 250 to braze the throttle plate 20 to the turbomachine component 10 i.e. the vane 11 in the illustrated embodiment. The energy beam 51 may be, but not limited to, laser beam, electron beam, and so forth. The energy source 50 for generating the laser beam may be, but not limited to, Carbon dioxide (CO₂) laser, fiber laser, diode laser, disk laser such as Yb:YAG crystal disk, pulsed Nd:YAG laser, etc. The energy source 50 for generating the electron beam may be, but not limited to, plasma electron source, tungsten cathode, etc. The energy beam 51 is directed towards the throttle plate 20 by using the beam deflector 60. The beam deflector 60 for the laser beam may be, but not limited to, arrangements of mirrors (not shown) or an array of crystals (not shown) with appropriate hardware such as precision motors to change an orientation or a position of the mirrors or the crystals. The beam deflector 60 for the electron beam may be, but not limited to, electron beam deflection coils. The beam deflector 60 for deflecting energy beam 51 are well known in the art of radiation technology and thus the same has not been described herein for sake of brevity.

It may be noted that, in accordance with aspects of the present technique, for brazing the throttle plate 20 to the turbomachine component 10, the braze material 22 is heated by energy of the energy beam 51 conducted through the throttle plate 20. The phenomenon of energy or heat transfer through conduction, also referred to as thermal conduction, is well known in the field of thermodynamics and thus the same has not been explained herein for the sake of brevity.

Referring to FIG 7, the controller 75 is configured to regulate the beam deflector 60 such that the energy beam 51 is directed towards the throttle plate 20 such that the braze material 22 is heated by energy of the energy beam 51 conducted through the throttle plate 20. The controller 75 may be, but not limited to, a microprocessor which is connected to the beam deflector 60 by suitable hardware and which can control a manner in which energy beam 51 is directed by the beam deflector 60, such as controlling or regulating or changing a direction of the energy beam 51, a form of the energy beam 51 for example a converging beam or a diverging beam, adjusting focus of the energy beam 51, etc.

In an embodiment of the method 1000, in performing the step 250 of directing the energy beam 51 towards the throttle plate 20, first the energy beam 51 in a defocused form 52 is directed onto the throttle plate 20 to pre-heat the throttle plate 20 in a step 220. Subsequently, the energy beam 51 in a focused form 53 is directed onto the throttle plate 20 so pre-heated to melt the braze material 22 in a step 240. As depicted in FIG 8, the energy beam 51 in the defocused form 52 means a focal point 55 of the energy beam 51 is either positioned above the throttle plate 20 or is positioned below the throttle plate 20 and not on the throttle plate 20. Thus, the focal point 55 of the energy beam 51 is positioned at a distance (not shown) away from the throttle plate 20.

Furthermore, as depicted in FIG 9, in the step 240 subsequent to the step 220, the energy beam 51 in the focused form 53 is used. The energy beam 51 in the focused form 53 means the focal point 55 of the energy beam 51 is positioned on the throttle plate 20. As a result of the energy beam 51 impacting on the throttle plate 20, energy or heat from the energy beam 51 is transferred to and deposited in the throttle plate 20. The energy or the heat so deposited in the throttle plate 20 passes onto the braze material 22 through conduction. The beam deflector 60 is adapted to effect focusing and/or defocusing of the energy beam 51 i.e. to change a position of the focal point 55 with respect to the throttle plate 20. The beam deflector 60 may be controlled by the controller 75 to effect focusing and/or defocusing of the energy beam 51.

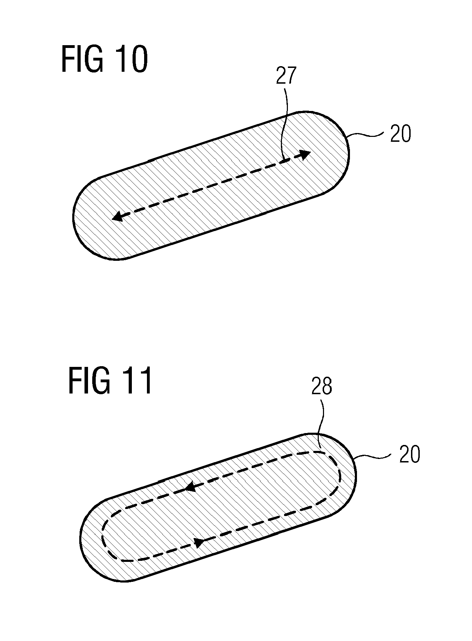

The beam deflector 60 may further be configured to direct the energy beam 51 in the defocused form 52 onto the throttle plate 20 such that the energy beam 51 traces a linear path 27 on the throttle plate 20 in a to-and-fro manner, as depicted in FIG 10. Furthermore, the beam deflector 60 may be configured to direct the energy beam 51 in the focused form 53 onto the throttle plate 20 such that the energy beam 51 traces a looped path 28 on the throttle plate 20. The looped path 28 corresponds to the outline 9 of the hole 6 in the turbomachine component 10, as depicted in FIG 11. When tracing the looped path 28, the energy beam 51 in the focused form 53 moves on the throttle plate 20 such that the focal point 55 of the energy beam 51 moves in those parts of a surface (not shown) of the throttle plate 20 that are nearest to the brazing material 22 i.e. the focal point 55 shifts in a continuous motion on those parts of the surface of the throttle plate 20 that are located above the braze material 22.

Referring to FIG 7, the brazing system 1 may further include a recognition module 80, a braze material deposition module 85 and a plate positioning module 90. The recognition module 80 is configured to recognize a region of the turbomachine component 10 around the outline 9 of the hole 6 in the turbomachine component 10. The recognition module 80 may be, but not limited to, a sensor (not shown) and a processor (not shown). The sensor senses a surface of the turbomachine component 10. The processor analyzes the output of the sensor to detect or determine the outline 9 (as shown in FIG 5) of the hole 6. For example, the sensor may be a camera for acquiring an image of the surface of the turbomachine component 10 and the processor analyzes the image and determines the outline 9 of the hole 6 by detecting edges of the hole 6 and area adjoining the outline 9 to determine the region of the turbomachine component 10 around the outline 9.

The braze material deposition module 85 is configured to place the braze material 22 on at least a part of the region of the turbomachine component 10. The plate positioning module 90 is configured to position the throttle plate 20 overlaying at least the outline 9 of the hole 6.

Each of the braze material deposition module 85 and the plate positioning module 90 may comprise a robotic arm (not shown) and a processing element (not shown) to control movements of the robotic arm. The robotic arm may be adapted to place the braze material 22 in the region of the turbomachine component 10 and/or to position the throttle plate 20. The processing element, for example a microprocessor, communicates with the recognition module 80 to determine and control the movement of the robotic arm based on the outline 9 of the hole 6 as recognized by the recognition module 80.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method (1000) for covering a hole (6) in a turbomachine component (10), the method (1000) comprising:
- placing (100) a braze material (22) on the turbomachine component (10) along at least a part of an outline (9) of the hole (6);
- positioning (150) a throttle plate (20) on the braze material (22) overlaying at least the outline (9) of the hole (6);
- generating (200) an energy beam (51) from an energy source (50); and
- directing (250) the energy beam (51) towards the throttle plate (20) to braze the throttle plate (20) to the turbomachine component (10) such that the braze material (22) is heated by energy of the energy beam (51) conducted through the throttle plate (20).

2. The method (1000) according to claim 1,
wherein directing (250) the energy beam (51) towards the throttle plate (20) comprises:
- directing (220) the energy beam (51) in a defocused form (52) onto the throttle plate (20) to pre-heat the throttle plate (20), and
- directing (240) the energy beam (51) in a focused form (53) onto the throttle plate (20) so pre-heated to melt the braze material (22).

3. The method (1000) according to claim 2,
wherein the energy beam (51) in the defocused form (52) is directed onto the throttle plate (20) such that the energy beam (51) traces a linear path (27) on the throttle plate (20) in a to-and-fro manner.

4. The method (1000) according to claims 2 or 3,
wherein the energy beam (51) in the focused form (53) is directed onto the throttle plate (20) such that the energy beam (51) traces a looped path (28) on the throttle plate (20) corresponding to the outline (9) of the hole (6) in the turbomachine component (10).

5. The method (1000) according to claims 1 to 4,
wherein the energy beam (51) is a laser beam.

6. The method (1000) according to claims 1 to 4,
wherein the energy beam (51) is an electron beam.

7. The method (1000) according to any of claims 1 to 6,
wherein the turbomachine component (10) is a blade (12) or a vane (11) of a turbomachine.

8. The method (1000) according to claim 7,
wherein the hole (6) is in a root (17) of the blade (12) or the vane (11).

9. The method (1000) according to claims 7 or 8,
wherein the hole (6) is in a platform (15) of the blade (12) or the vane (11).

10. A brazing system (1) for covering a hole (6) in a turbomachine component (10) by brazing a throttle plate (20) to the turbomachine component (10) with a braze material (22), the brazing system (1) comprising:
- an energy source (50) adapted to generate an energy beam (51) ;
- a beam deflector (60) adapted to direct the energy beam (51) towards the throttle plate (20) to braze the throttle plate (20) to the turbomachine component (10); and
- a controller (75) adapted to regulate the beam deflector (60) such that the energy beam (51) is directed towards the throttle plate (20) such that the braze material (22) is heated by energy of the energy beam (51) conducted through the throttle plate (20).

11. The brazing system (1) according to claim 10,
wherein the beam deflector (60) is further adapted to adjust a focal point (55) of the energy beam (51).

12. The brazing system (1) according to claim 10 or 11,
wherein the beam deflector (60) is further adapted to move the energy beam (51) such that the energy beam (51) traces a pre-determined path (27,28) on the throttle plate (20).

13. The brazing system (1) according to any of claims 10 to 12 further comprising:
- a recognition module (80) adapted to recognize a region of the turbomachine component (10) around an outline (9) of the hole (6) in the turbomachine component (10),
- a braze material deposition module (85) adapted to place the braze material (22) on at least a part of the region of the turbomachine component (10); and
- a plate positioning module (90) adapted to position the throttle plate (20) overlaying at least the outline (9) of the hole (6).

14. The brazing system (1) according to any of claims 10 to 13,
wherein the energy source (50) is adapted to generate a laser beam.

15. The brazing system (1) according to any of claims 10 to 13,
wherein the energy source (50) is adapted to generate an electron beam.
